# EUROPÄISCHE PATENTSCHRIFT

(11) **EP 4 680 872 B1**
(45) Veröffentlichungstag und Bekanntmachung des Hinweises auf die Patenterteilung: **08.04.2026**
(21) Anmeldenummer: 23793885.7
(22) Anmeldetag: 24.10.2023
(51) Int. Cl.: F16D 55/226, F16D 65/18

(54) **ELEKTROMECHANISCHE BREMSVORRICHTUNG FÜR EIN KRAFTFAHRZEUG MIT SCHALTUNGSANORDNUNG ZUM BETREIBEN DER ELEKTROMOTOREN DER BREMSVORRICHTUNG**
ELECTROMECHANICAL BRAKE DEVICE FOR A MOTOR VEHICLE HAVING A CIRCUIT ARRANGEMENT FOR OPERATING THE ELECTRIC MOTORS OF THE BRAKE DEVICE
DISPOSITIF DE FREIN ÉLECTROMÉCANIQUE POUR VÉHICULE AUTOMOBILE COMPORTANT UN CIRCUIT POUR FAIRE FONCTIONNER LES MOTEURS ÉLECTRIQUES DU DISPOSITIF DE FREIN

(30) Priorität: 15.03.2023 BE 202305185
(43) Veröffentlichungstag der Anmeldung: 21.01.2026
(73) Patentinhaber: thyssenkrupp Presta AG, 9492 Eschen (LI); thyssenkrupp AG, 45143 Essen (DE)
(72) Erfinder: MULLER, Mark, 1114 Budapest (HU); SZIMANDL, Dr. Barna, 9473 Gams (CH); ERDELYI, Zoltan Szabolcs, 1114 Budapest (HU)
(74) Vertreter: thyssenkrupp Intellectual Property GmbH
(86) Internationale Anmeldenummer: PCT/EP2023/079619
(87) Internationale Veröffentlichungsnummer: WO 2024/188480

(56) Entgegenhaltungen:
- DE-A1- 102017 123 266
- FR-A1- 2 757 918

## Beschreibung

Die Erfindung betrifft eine elektromechanische Bremsvorrichtung für ein Kraftfahrzeug, wobei die Bremsvorrichtung eine Stellvorrichtung und ein damit verbundenes Bremsteil umfasst, das von der Stellvorrichtung entlang einer Achse verstellbar und mit einem Gegenbremsteil in Bremseingriff bringbar ist. Die Stellvorrichtung weist dabei einen ersten Stelltrieb und einen zweiten Stellantrieb auf und umfasst zur Realisierung einer Verstellbewegung einen ersten dreiphasigen Elektromotor und einen zweiten dreiphasigen Elektromotor mit einer Schaltungsanordnung zum Betreiben der Elektromotoren.

Eine derartige Bremsvorrichtung eines Kraftfahrzeugs ist als Reibungsbremse ausgebildet, bei dem ein am Fahrgestell abgestütztes, relativ zur Drehung des zu bremsenden Rades feststehendes Bremsteil mittels einer Stellvorrichtung in Bremseingriff gebracht werden kann mit einem Gegenbremsteil, welches mit dem Rad rotiert. Im Bremseingriff wird ein Reibkontakt zwischen Bremsteil und Gegenbremsteil erzeugt, wobei das durch Reibung erzeugte Bremsmoment umso größer ist, je höher die von der Stellvorrichtung in der Verstellrichtung ausgeübte Verstellkraft ist.

Eine verbreitete Bauform sind Scheibenbremsen, bei denen das Gegenbremsteil durch eine mit dem Rad rotierende Bremsscheibe gebildet wird, die von einem Bremssattel beidseitig axial umgriffen wird. Durch mindestens einen an dem Bremssattel axial abgestützten, bevorzugt linearen Stelltrieb kann ein Bremsteil, in der Regel ein Bremsbelag, in einer axialen Verstellrichtung verstellt und dadurch in Reibkontakt mit einer Axialseite der Bremsscheibe gebracht werden, wobei die Bremsscheibe zwischen dem verstellten Bremsteil und einem weiteren, axial gegenüberliegend an dem Bremssattel abgestützten Bremsteil im Bremseingriff reibschlüssig eingespannt wird.

Voraussetzung für eine einwandfreie Funktion und ein punktgenaues Ansprechen der Bremse ist, dass im unbetätigten Zustand zwischen dem Bremsteil und dem Gegenbremsteil in der Verstellrichtung ein definierter Abstand, der sogenannte Luftspalt bereitgestellt wird. Bei der Betätigung der Bremse wird das Bremsteil durch die Stellvorrichtung senkrecht zum Luftspalt auf das Gegenbremsteil zu bewegt, bis der Luftspalt überwunden und der Reibkontakt erreicht ist, so dass der Bremseingriff erzeugt ist.

Für ein reproduzierbares und punktgenaues Ansprechen der Bremse im Fahrbetrieb ist es maßgeblich, dass der Luftspalt im unbetätigten Zustand in der axialen Verstellrichtung gemessen eine definierte Spaltbreite hat. Die Spaltbreite kann sich im Laufe des Betriebs beispielsweise durch Abnutzung des Bremsbelags vergrößern, und muss entsprechend nachjustiert werden. Zur Justierung des Luftspalts ist es aus der DE 10 2017 123 266 A1 bekannt, dass die Stellvorrichtung zwei in Verstellrichtung seriell angeordnete Stelltriebe aufweist. Jeder der Stelltriebe weist ein antriebsseitiges Antriebselement und ein relativ dazu linear in der axialen Verstellrichtung verstellbares abtriebsseitiges Abtriebselement auf. Zur Realisierung einer Verstellbewegung weist jedes Antriebselement ein Antriebsrad auf, welches durch einen elektrischen Stellmotor um seine Achse drehend antreibbar ist. Die Drehung des Antriebsrads wird in dem Stelltrieb jeweils in eine relative Verstellbewegung beziehungsweise einen Stellhub des Abtriebselements relativ zum Antriebselement in der axialen Verstellrichtung umgesetzt.

Ein Stelltrieb bildet jeweils eine in der Verstellrichtung axial wirksame Hub- oder Verstelleinrichtung. Beispielsweise kann ein Stelltrieb einen Spindeltrieb aufweisen, bei dem das Antriebselement eine Spindelmutter aufweist, und das Abtriebselement eine darin eingreifende Gewindespindel, oder umgekehrt. Es können auch andere Bauformen von Stelltrieben eingesetzt werden, die beispielsweise Rampenlager, Nocken- oder Kurvenscheiben, Kippstiftanordnungen oder dergleichen umfassen können, und ebenfalls eine Drehung des Antriebselements in eine lineare Verstellung des Abtriebselements umsetzen.

Dadurch, dass das Antriebselement des zweiten Stelltriebs mit dem Abtriebselement des ersten Stelltriebs gekoppelt ist, und das Bremselement am Abtriebselement des zweiten Stelltriebs angebracht ist, kann durch eine Betätigung des ersten Stelltriebs das Bremselement zusammen mit dem zweiten Stelltrieb linear verstellt werden, um den Bremseingriff zu erzeugen. Durch eine Verstellung des zweiten Stelltriebs unabhängig von der Betätigung des ersten Stelltriebs kann der Luftspalt justiert werden. Der erste Stelltrieb kann somit durchgehend im optimalen Arbeitsbereich betrieben werden.

Ein weiterer Vorteil der zwei gekoppelten Stelltriebe ist, dass eine redundante Auslegung möglich ist. So kann beispielsweise durch den im Normalbetrieb lediglich zur Justierung des Luftspalts eingesetzten zweite Stelltrieb grundsätzlich auch der Bremseingriff erzeugt werden. Zur Erhöhung der Ausfallsicherheit ist dabei auch wichtig, dass die Elektromotoren zuverlässig angesteuert werden können.

Vor diesem Hintergrund ist es eine Aufgabe der vorliegenden Erfindung, eine verbesserte elektromechanische Bremsvorrichtung bereitzustellen, insbesondere mit einer Schaltungsanordnung zum Betreiben der Elektromotoren mit einer hohen Zuverlässigkeit.

Zur Lösung dieser Aufgabe wird eine elektromechanische Bremsvorrichtung gemäß Anspruch 1 vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht eine elektromechanische Bremsvorrichtung für ein Kraftfahrzeug umfassend eine Stellvorrichtung und ein damit verbundenes Bremsteil vor, wobei das Bremsteil von der Stellvorrichtung entlang einer Achse verstellbar und mit einem Gegenbremsteil in Bremseingriff bringbar ist, und wobei die Stellvorrichtung einen ersten Stelltrieb und einen zweiten Stelltrieb aufweist und die Stellvorrichtung zur Realisierung einer Verstellbewegung einen ersten dreiphasigen Elektromotor und einen zweiten dreiphasigen Elektromotor mit einer Schaltungsanordnung zum Betreiben der Elektromotoren umfasst. Erfindungsgemäß ist vorgesehen, dass die Schaltungsanordnung einen ersten Steuerpfad mit einem ersten Leistungsmodul zur Steuerung des ersten Elektromotors und einen zweiten Steuerpfad mit einem zweiten Leistungsmodul zur Steuerung des zweiten Elektromotors umfasst, und dass die Schaltungsanordnung eine erste Recheneinheit und eine erste Treiberstufe umfasst. Die erste Recheneinheit ist dabei ausgebildet, anhand von erfassten Parametern eine Elektromotor-Sollvorgabe zu bestimmen und über eine Treiberstufe ein Leistungsmodul zur Beeinflussung der Motorströme anzusteuern, sodass die Elektromotor-Sollvorgabe umgesetzt wird. Die erfassten Parameter umfassen dabei insbesondere eine Bremsvorgabe, die insbesondere von einem Fahrer oder einem Fahrerassistenzsystem vorgegeben werden kann, und eine aktuelle Geschwindigkeit des Kraftfahrzeugs. Die Leistungsmodule umfassen dabei vorteilhafterweise jeweils einen Umrichter, der vorzugsweise jeweils eine Brückenschaltung aus MOSFETs (MOSFET: Metall-Oxid-Halbleiter-Feldeffekttransistor) für die Steuerung des jeweiligen Elektromotors umfasst. Weiter vorteilhaft kann das jeweilige Leistungsmodul eine Phasentrenneinheit, die vorzugsweise für jede Phase des jeweiligen Elektromotors ein Phasenrelais aufweist. Weiter vorteilhaft umfasst das jeweilige Leistungsmodul einen PWM-Controller (PWM: Pulsweitenmodulation). Mit einer solchen Schaltungsanordnung können die Elektromotoren vorteilhaferweise mit hoher Zuverlässigkeit und hoher Ausfallsicherheit betrieben werden.

Eine besonders vorteilhafte Ausgestaltung der Bremsvorrichtung sieht vor, dass der zweite Stelltrieb seriell mit dem ersten Stelltrieb gekoppelt ist, wobei der erste Stelltrieb ein drehend antreibbares erstes Antriebsrad aufweist, und der zweite Stelltrieb ein drehend antreibbares, zu dem ersten Antriebsrad koaxiales zweites Antriebsrad aufweist, wobei zwischen dem ersten Antriebsrad und dem zweiten Antriebsrad eine Kupplungsvorrichtung angeordnet ist, und wobei die Kupplungsvorrichtung als Reibkupplung ausgebildet ist mit einem Reibelement, das im Kupplungseingriff reibschlüssig mit einem Gegenreibelement verbindbar ist, wobei der erste Elektromotor eine Betätigung des ersten Stelltriebs ermöglicht und der zweite Elektromotor eine Betätigung des zweiten Stelltriebs ermöglicht. Im Folgenden werden das erste und das zweite Antriebsrad mitunter auch zusammen als die beiden Antriebsräder oder kurz als die Antriebsräder bezeichnet. Die Antriebsräder können als Zahnrad, insbesondere als Stirnrad, oder aus als Riemen- oder Zahnriemenrad oder Schneckenrad ausgebildet sein, sodass vorteilhafterweise ein Getrieberad zur Verfügung gestellt wird, über das ein Antriebsmoment von dem jeweiligen Elektromotor in den Stelltrieb eingekoppelt werden kann.

Vorzugsweise ist zwischen den Antriebsrädern eine Reibkupplung realisiert. Diese umfasst ein Reibelement, welches mit dem einen der Antriebsräder drehmomentschlüssig verbunden ist, und ein damit korrespondierendes Gegenreibelement, welches mit dem jeweils anderen Antriebsrad drehmomentschlüssig verbunden ist. Das Reibelement kann mit dem Gegenreibelement in jeder beliebigen relativen Winkelstellung in reibschlüssigen Kupplungseingriff gebracht werden. Dabei wird vorzugsweise eine rein kraftschlüssige Kupplung realisiert. Dadurch kann die relative Stellung der Antriebsräder zueinander vorteilhafterweise kontinuierlich vorgegeben werden. Entsprechend ist eine gleichmäßige, kontinuierliche Verstellung des zweiten Stelltriebs relativ zum ersten Stelltreib ermöglicht, und es kann eine kontinuierliche Justierung des Luftspalts erfolgen. Dies ist besonders vorteilhaft im Hinblick auf eine gleichmäßige Nachführung des optimalen Arbeitspunkts der Bremsvorrichtung an die kontinuierliche Abnutzung des Bremsteils im Betrieb, das heißt dem kontinuierlichen Verschleiß des Bremsbelags. So kann ein durchgehend verbessertes Ansprechverhalten der Bremsvorrichtung realisiert werden, und damit eine erhöhte Betriebssicherheit und ein höherer Bedienkomfort. Ferner ist vorteilhafterweise zum Betätigen und Lösen der Kupplungsvorrichtung im Wesentlichen keine axiale Relativbewegung zwischen den im Kupplungseingriff stehenden Kupplungselementen erforderlich, beispielsweise zwischen den Antriebsrädern oder den Rastelementen, die zum Erzeugen und Lösen des rastbaren Formschlusses zwangsläufig zueinander bewegbar sein müssen. Dagegen kann der reine Kraftschluss zwischen dem Reib- und Gegenreibelement einfach durch die angelegte axiale Betätigungskraft vorgegeben werden, wobei Reib- und Gegenreibelement nicht axial relativ zueinander bewegt werden müssen. Dadurch wird eine einfachere und zuverlässigere konstruktive Gestaltung der Kupplungsvorrichtung ermöglicht.

Gemäß einer weiteren vorteilhaften Ausgestaltung ist die Schaltungsanordnung ausgebildet, unter Nutzung der ersten Recheneinheit und der ersten Treiberstufe den ersten Elektromotor und den zweiten Elektromotor zu steuern. Insbesondere sieht eine Ausgestaltung vor, dass die erste Recheneinheit ausgebildet ist, anhand der empfangenen Parameter eine erste Sollvorgabe für den ersten Elektromotor und eine zweite Sollvorgabe für den zweiten Elektromotor zu bestimmen und über die erste Treiberstufe sowohl das erste Leistungsmodul, das dem ersten Elektromotor zugeordnet ist, als auch das zweite Leistungsmodul, das dem zweiten Elektromotor zugeordnet ist, zur Beeinflussung der Motorströme so anzusteuern, dass die erste Sollvorgabe von dem ersten Elektromotor umgesetzt wird und die zweite Sollvorgabe von dem zweiten Elektromotor umgesetzt wird. Vorteilhafterweise kann bei dieser Ausgestaltung bei einem Ausfall eines der Elektromotoren der andere Elektromotor zur Erzeugung eines Bremseingriffs immer noch angesteuert werden.

Eine weitere vorteilhafte Ausgestaltung sieh vor, dass die Schaltungsanordnung zusätzlich eine zweite Treiberstufe umfasst, wobei die erste Treiberstufe vorteilhafterweise dem ersten Steuerpfad zugeordnet ist, und die zweite Treiberstufer vorteilhafterweise dem zweiten Steuerpfad zugeordnet ist. Vorzugsweise ist die Schaltungsanordnung dabei so eingerichtet, dass die erste Recheneinheit ausgebildet ist, anhand der empfangenen Parameter eine erste Sollvorgabe für den ersten Elektromotor und eine zweite Sollvorgabe für den zweiten Elektromotor zu bestimmen und über die erste Treiberstufe das erste Leistungsmodul und über die zweite Treiberstufe das zweite Leistungsmodul zur Beeinflussung der Motorströme so anzusteuern, dass die erste Sollvorgabe von dem ersten Elektromotor umgesetzt wird und die zweite Sollvorgabe von dem zweiten Elektromotor umgesetzt wird. Dabei ist vorteilhafterweise eine derartige Verschaltung der ersten Treiberstufe und der zweiten Treiberstufe vorgesehen, dass bei einem Ausfall der zweiten Treiberstufe eine Ansteuerung des ersten Leistungsmoduls und eine Ansteuerung des zweiten Leistungsmoduls über die erste Treiberstufe ermöglicht ist. Weiter vorteilhaft ist eine derartige Verschaltung der ersten Treiberstufe und der zweiten Treiberstufe vorgesehen, dass bei einem Ausfall der ersten Treiberstufe eine Ansteuerung des ersten Leistungsmoduls und eine Ansteuerung des zweiten Leistungsmoduls über die zweite Treiberstufe ermöglicht ist. Die Treiberstufen sind insofern redundant vorhanden und erhöhen so vorteilhafterweise weiter die Ausfallsicherheit. Vorzugsweise ist eine der Schaltungsanordnung zugeordnete Überwachungseinheit dabei ausgebildet, eine Funktionsbeeinträchtigung der ersten Treiberstufe und/oder der zweiten Treiberstufe zu erkennen. Vorteilhafterweise können bei dieser Ausgestaltung bei einem Ausfall einer der Treiberstufen die Elektromotoren zur Erzeugung eines Bremseingriffs immer noch über die noch funktionsfähige Treiberstufe angesteuert werden.

Als eine weitere vorteilhafte Ausgestaltung ist vorgesehen, dass die Schaltungsanordnung eine zweite Treiberstufe und eine zweite Recheneinheit umfasst, wobei die erste Treiberstufe und die erste Recheneinheit vorteilhafterweise dem ersten Steuerpfad zugeordnet sind, und die zweite Treiberstufe und die zweite Recheneinheit vorteilhafterweise dem zweiten Steuerpfad zugeordnet sind. Vorteilhafterweise ist die zweite Recheneinheit, insbesondere wie auch die erste Recheneinheit, ausgebildet, anhand von erfassten Parametern eine Elektromotor-Sollvorgabe zu bestimmen und über eine Treiberstufe ein Leistungsmodul zur Beeinflussung der Motorströme anzusteuern, sodass die Elektromotor-Sollvorgabe umgesetzt wird. Insbesondere ist vorgesehen, dass in einem störungsfreien Betrieb die erste Recheneinheit anhand von erfassten Parametern eine erste Elektromotor-Sollvorgabe für den ersten Elektromotor bestimmt und über die erste Treiberstufe das erste Leistungsmodul zur Beeinflussung der Motorströme des ersten Elektromotors zur Umsetzung der ersten Elektromotor-Sollvorgabe ansteuert. Weiter ist in einem störungsfreien Betrieb insbesondere vorgesehen, dass die zweite Recheneinheit anhand von erfassten Parametern eine zweite Elektromotor-Sollvorgabe für den zweiten Elektromotor bestimmt und über die zweite Treiberstufe das zweite Leistungsmodul zur Beeinflussung der Motorströme des zweiten Elektromotors zur Umsetzung der zweiten Elektromotor-Sollvorgabe ansteuert. Für den Fall einer Funktionsstörung an der ersten Recheneinheit ist die zweite Recheneinheit vorteilhafterweise aber auch ausgebildet, eine erste Elektromotor-Sollvorgabe für den ersten Elektromotor zu bestimmen und den ersten Elektromotor entsprechend über den ersten Steuerpfad anzusteuern. Vorteilhafterweist ist entsprechend für den Fall einer Funktionsstörung an der zweiten Recheneinheit die erste Recheneinheit auch ausgebildet, eine zweite Elektromotor-Sollvorgabe für den zweiten Elektromotor zu bestimmen und den zweiten Elektromotor entsprechend über den zweiten Steuerpfad anzusteuern. Auf diese Weise sind vorteilhafterweise zwei unabhängig voneinander nutzbare Steuerpfade geschaffen, wodurch vorteilhafterweise weiter sichergestellt ist, dass bei einer Funktionsbeeinträchtigung in einem der Steuerpfade über den anderen Steuerpfad der zugehörige Elektromotor weiter betrieben werden kann und somit ein Bremseingriff trotz einer Funktionsbeeinträchtigung umgesetzt werden kann. Vorzugsweise sind der erste Steuerpfad und der zweite Steuerpfad redundant zueinander ausgebildet. Insbesondere kann dabei auch vorgesehen sein, dass eine der Recheneinheiten, insbesondere die erste Recheneinheit als Master-Recheneinheit festgelegt ist, die in einem Normalbetrieb die ersten Elektromotor-Sollvorgaben und die zweiten Elektromotor-Sollvorgaben bestimmt und den ersten Elektromotor über den ersten Steuerpfad und den zweiten Elektromotor über den zweiten Steuerpfad ansteuert, wobei die zweite Recheneinheit, die in diesem Fall insbesondere leistungsschwächer als die erste Recheneinheit ausgebildet sein kann, die von der ersten Recheneinheit bestimmten Sollvorgaben auf Plausibilität prüft. Vorteilhafterweise dann, wenn eine Funktionsbeeinträchtigung im Hinblick auf die erste Recheneinheit erkannt wurde, werden die Sollvorgaben von der zweiten Recheneinheit bestimmt und die zweite Recheneinheit übernimmt die Ansteuerung des ersten und des zweiten Elektromotors über den jeweiligen Steuerpfad.

Insbesondere ist bei der Ausgestaltung, bei der die Schaltungsanordnung eine erste Recheneinheit und eine erste Treiberstufe in dem ersten Steuerpfad umfasst und eine zweite Recheneinheit und eine zweite Treiberstufe in dem zweiten Steuerpfad umfasst, dass die erste Recheneinheit ausgebildet ist, über die erste Treiberstufe das erste Leistungsmodul zur Beeinflussung der Motorströme des ersten Elektromotors anzusteuern und die zweite Recheneinheit ausgebildet ist, über die zweite Treiberstufe das zweite Leistungsmodul zur Beeinflussung der Motorströme des zweiten Elektromotors anzusteuern. Weiter vorteilhaft ist die erste Recheneinheit dabei weiter ausgebildet ist, über die erste Treiberstufe das erste Leistungsmodul zur Beeinflussung der Motorströme des ersten Elektromotors anzusteuern und über die zweite Treiberstufe das zweite Leistungsmodul zur Beeinflussung der Motorströme des zweiten Elektromotors anzusteuern. Weiter vorteilhaft ist die zweite Recheneinheit dabei weiter ausgebildet, über die zweite Treiberstufe das zweite Leistungsmodul zur Beeinflussung der Motorströme des zweiten Elektromotors anzusteuern und über die erste Treiberstufe das erste Leistungsmodul zur Beeinflussung der Motorströme des ersten Elektromotors anzusteuern. Ein Ausfall der ersten Recheneinheit kann somit vorteilhafterweise durch die zweite Recheneinheit kompensiert werden und umgekehrt.

Gemäß einer weiteren vorteilhaften Ausgestaltung ist dem ersten Elektromotor ein erster Rotorpositionssensor zugeordnet und dem zweiten Elektromotor ein zweiter Rotorpositionssensor zugeordnet. Der erste Rotorpositionssensor ist dabei vorteilhafterweise zur Übertragung von Rotorpositionssignalen mit der ersten Recheneinheit und/oder der zweiten Recheneinheit verbunden und der zweite Rotorpositionssensor ist vorteilhafterweise zur Übertragung von Rotorpositionssignalen mit der ersten Recheneinheit und/oder der zweiten Recheneinheit verbunden. Vorteilhafterweise sind die Rotorpositionssignale weitere Parameter, die die erste Recheneinheit erfasst oder die erste Recheneinheit und die zweite Recheneinheit erfassen, um eine Elektromotor-Sollvorgabe zu bestimmen. Insbesondere ist vorgesehen, dass der erste Rotorpositionssensor zur Übertragung von Rotorpositionssignalen mit der ersten Recheneinheit verbunden ist und die erste Recheneinheit ausgebildet ist, diese Rotorpositionssignale an die zweite Recheneinheit weiterzuleiten. Weiter vorteilhaft ist der zweite Rotorpositionssensor zur Übertragung von Rotorpositionssignalen mit der zweiten Recheneinheit verbunden und die zweite Recheneinheit ausgebildet, diese Rotorpositionssignale an die erste Recheneinheit weiterzuleiten.

Des Weiteren sieht eine vorteilhafte Ausgestaltung der Bremsvorrichtung vor, dass der erste Steuerpfad ein erstes Anschlusselement zum Anschluss an eine Spannungsquelle eines Kraftfahrzeugs als Energiequelle umfasst und/oder der zweite Steuerpfad ein zweites Anschlusselement zum Anschluss an eine Spannungsquelle eines Kraftfahrzeugs als Energiequelle umfasst. Über diese Anschlusselemente kann insbesondere ein Anschluss an eine Energiequelle eines Kraftfahrzeugs, insbesondere an eine Batterie des Kraftfahrzeugs, erfolgen. Vorzugsweise wird dabei der erste Steuerpfad über das erste Anschlusselement mit Energie von der Energiequelle des Kraftfahrzeugs versorgt und der zweite Steuerpfad über das zweite Anschlusselement mit Energie von der Energiequelle des Kraftfahrzeugs versorgt. Durch diese Redundanz ist eine Ausfallsicherheit vorteilhafterweise weiter verbessert. Vorteilhafterweise ist dem ersten Anschlusselement ein EMI-Filter (EMI: elektromagnetische Interferenz) zugeordnet und/oder dem zweiten Anschlusselement ein EMI-Filter zugeordnet.

Gemäß einer weiteren vorteilhaften Ausgestaltung umfasst der erste Steuerpfad eine erste Schnittstelle zum Anschließen an einen Kommunikationskanal, insbesondere einen CAN-Bus, eines Kraftfahrzeugs und/oder der zweite Steuerpfad eine zweite Schnittstelle zum Anschließen an einen Kommunikationskanal, insbesondere einen CAN-Bus, eines Kraftfahrzeugs. Über diese erste Schnittstelle und/oder diese zweite Schnittstelle können der ersten Recheneinheit und/oder der zweiten Recheneinheit Fahrzeugparameter bereitgestellt werden, insbesondere eine Bremsvorgabe und/oder eine aktuelle Fahrzeuggeschwindigkeit, die bei der Bestimmung der Elektromotor-Sollvorgabe berücksichtigt werden. Durch diese Redundanz ist eine Ausfallsicherheit vorteilhafterweise weiter verbessert.

Weiter vorteilhaft umfasst der erste Steuerpfad eine dritte Schnittstelle zum Anschließen an einen Raddrehzahlsensor und/oder umfasst der zweite Steuerpfad eine dritte Schnittstelle zum Anschließen an einen Raddrehzahlsensor. Über diese Schnittstellen können vorteilhafterweise Sensorsignale des Raddrehzahlsensors als weiterer Parameter an die erste Recheneinheit und/oder an die zweite Recheneinheit übertragen werden.

Gemäß einer weiteren vorteilhaften Ausgestaltung umfasst der erste Steuerpfad eine Transceiver-Einheit und/oder umfasst der zweite Steuerpfad eine Transceiver-Einheit. Die Transceiver-Einheit ist dabei vorteilhafterweise für einen Datenaustausch zwischen der jeweiligen Recheneinheit und dem Kraftfahrzeug, insbesondere über die erste Schnittstelle und/oder die zweite Schnittstelle, ausgebildet.

In Bezug auf eine Ausgestaltung der Bremsvorrichtung, bei der zwischen einem ersten Antriebsrad und einem zweiten Antriebsrad eine als Reibkupplung ausgebildete Kupplungsvorrichtung vorgesehen ist, weist die Reibkupplung bevorzugt ein definiert vorgebbares Kupplungsmoment auf. Das Kupplungsmoment gibt das maximale Differenzmoment an, welches durch den Reibschluss im Kupplungseingriff kraftschlüssig zwischen Reibelement und Gegenreibelement übertragen werden kann. Beim Überschreiten des Kupplungsmoments rutscht die Kupplungsvorrichtung durch, sodass die beiden Antriebsräder relativ zueinander verdreht werden. Ein Vorteil dabei ist, dass die erfindungsgemäße Reibkupplung kontinuierlich gleitend durchrutscht, sodass eine verbesserte, gleichmäßige Nachjustierung des Luftspalts ermöglich wird. Darüber hinaus müssen keine axialen Ausweichbewegungen von Rastelementen konstruktiv berücksichtigt und abgefangen werden.

Es ist vorteilhaft, dass das Reibelement und das Gegenreibelement der Kupplungsvorrichtung koaxial angeordnet sind. Dabei korrespondiert die koaxiale Anordnung vorteilhafterweise mit der koaxialen Anordnung der Antriebsräder. Das Reibelement und das Gegenreibelement können konstruktiv einfach und in einer kompakten Bauform im Bereich der axial gegeneinander gerichteten Stirnseiten der Antriebsräder angeordnet sein. Durch die vorangehend beschriebene Erzeugung des reinen Kraftschlusses der Kupplung sind keinerlei bewegliche Teile erforderlich.

In einer vorteilhaften Ausführung kann vorgesehen sein, dass das Reibelement und das Gegenreibelement konisch ausgebildet sind. Das Reibelement kann dabei einen zumindest abschnittweise in der axialen Verstellrichtung zusammenlaufenden Kegelabschnitt mit einer konischen Reibfläche aufweisen, der als Außenkonus oder Innenkonus ausgebildet sein kann, und der mit einem korrespondierenden Kegelabschnitt am Gegenreibelement, der entsprechend gegensinnig als Innenkonus oder Außenkonus ausgestaltet ist und eine konische Gegenreibfläche aufweist. Zur Erzeugung des Kupplungseingriffs taucht der Außenkonus in den Innenkonus ein, wobei die konischen Reib- und Gegenreibflächen durch eine axiale Betätigungskraft der Kupplung reibschlüssig gegeneinander belastet werden. Ein Vorteil dabei ist, dass durch den Konus eine Kraftübersetzung der axial einwirkenden Betätigungskraft der Kupplung in die zwischen den konischen Reibflächen im Reibkontakt wirkende Normalkraft erfolgen kann. So kann durch eine flachere Steigung eine relativ kleine axiale Betätigungskraft in eine größere Normalkraft im Reibkontakt umgesetzt werden, wodurch bereits durch eine relativ kleine axiale Betätigungskraft der Kupplung ein hohes Kupplungsmoment realisierbar ist.

Alternativ oder zusätzlich zu der vorgenannten Ausführung kann vorgesehen sein, dass das Reibelement und das Gegenreibelement planar ausgebildet sind. Dabei sind die miteinander korrespondierenden Reibflächen vorzugsweise zumindest abschnittweise als plane Axialflächen ausgebildet, ähnlich einer Scheibenkupplung. Es wird eine bauraumsparende Anordnung ermöglicht, insbesondere wenn nur ein relativ kleines Kupplungsmoment realisiert werden soll.

Es kann insbesondere vorgesehen sein, dass das Reibelement und das Gegenreibelement gegeneinander vorgespannt sind. Bevorzugt sind das Reibelement und das Gegenreibelement elastisch beziehungsweise federnd gegeneinander vorgespannt. Dabei werden die Reib- und Gegenreibflächen mit einer vorgegebenen axialen Vorspannkraft im Reibschluss gegeneinander angepresst. Zur Erzeugung der Vorspannkraft kann bevorzugt ein elastisches Vorspannelement vorgesehen sein, insbesondere ein Federelement oder dergleichen. Das Kupplungsmoment der Reibkupplung wird durch die senkrecht zum Reibkontakt wirkende Betätigungskraft bestimmt, also die axial zwischen Reib- und Gegenreibelement aufgebrachte Kraft, wobei das Kupplungsmoment umso größer ist, je größer die Vorspannkraft ist. Dies eröffnet die vorteilhafte Möglichkeit, das Kupplungsmoment einfach durch die durch das Vorspannelement ausgeübte Vorspannkraft vorzugeben. Beispielsweise kann bei einem in axialer Richtung druckelastischen Federelement, insbesondere einer Druckfeder, die ausgeübte Vorspannkraft einfach durch die Federkonstante und die Kompression der Feder vorgegeben und angepasst werden.

Die vorgenannte Ausführungsform kann in vorteilhafter Weise dadurch realisiert sein, dass das Reibelement und/oder das Gegenreibelement axial verlagerbar und über ein axial wirksames Federelement gegen das erste Antriebsrad oder das zweite Antriebsrad abgestützt ist. Das Reibelement oder das Gegenreibelement sind dabei drehmomentschlüssig, und axial verlagerbar mit dem einen Antriebsrad verbunden, insbesondere über radial vorstehende, einen in Umfangsrichtung wirksamen Formschluss erzeugende Mitnehmer. Das zwischen dem Reibelement oder dem Gegenreibelement und dem einen Antriebsrad axial eingespannte Federelement, welches bevorzugt als axial wirksame Druckfeder ausgebildet ist, sorgt dafür, dass das Reib- oder Gegenreibelement axial gegen das korrespondierende, an dem anderen Antriebsrad axial abgestützte Gegenreib- oder Reibelement vorgespannt wird, das heißt axial im Reibkontakt dagegen angepresst wird. Das korrespondierende Gegenreib- oder Reibelement ist drehschlüssig mit dem jeweils anderen Antriebsrad verbunden. Es ist auch möglich, dass alternativ oder zusätzlich das Gegenreibelement über ein Federelement an einem der Antriebsräder abgestützt ist. Ein Vorteil dieser Anordnung ist, dass die erfindungsgemäße Reibkupplung konstruktiv einfach und bauraumsparend zwischen den Antriebsrädern eingegliedert werden kann.

In einer vorteilhaften Weiterbildung ist es möglich, dass das Reibelement und/oder das Gegenreibelement in dem ersten Antriebsrad oder dem zweiten Antriebsrad angeordnet ist. So ist es beispielsweise möglich, das eine Antriebsrad im Wesentlichen trommelförmig zu gestalten, sodass in einem von dem umlaufenden Zahnrad oder Zahnkranz umschlossenen Innenraum das Reib- oder Gegenreibelement angeordnet sein kann. Dadurch wird eine kompakte, gegen äußere Einflüsse geschützte Bauform ermöglicht. So kann beispielsweise das Antriebsrad des ersten Stelltriebs ein konisches Reibelement aufweisen, welches axial in ein als Innenkonus ausgebildetes Gegenreibelement eingreift, das zumindest teilweise innerhalb des zweiten Antriebsrads angeordnet ist.

Eine besonders kompakte Bauform kann - insbesondere bei der zuletzt genannten Ausführung - dadurch realisiert sein, dass die Antriebsräder innerhalb der axialen Erstreckung der Stelltriebe angeordnet sind, also nicht einseitig axial vorstehend angebracht sind.

Es ist bevorzugt, dass das Reibelement und/oder das Gegenreibelement einen Reibbelag aufweisen. Das Reib- und Gegenreibelement weisen bevorzugt einen metallischen Grundkörper auf, insbesondere aus Stahl. Zur Vermeidung von Metall-Metall-Kontakt kann bevorzugt eine Beschichtung oder ein Belag zur Erzeugung einer Reibpaarung mit einer definierten Reibkraft aufgebracht sein, insbesondere aus Sinter-, Metall- und/oder Keramikreibwerkstoffen, Verbundwerkstoffen oder dergleichen. Dadurch kann ein definiertes, reproduzierbares Kupplungsmoment gewährleistet werden.

Weiter vorteilhaft weist ein Stelltrieb einen Spindeltrieb auf, der vorteilhafterweise von einem der Elektromotoren angetrieben wird. Bei dem Spindeltrieb greift in an sich bekannter Weise eine Gewindespindel in eine Spindelmutter ein und ein relativer drehender Antrieb über ein mit der Gewindespindel oder der Spindelmutter verbundenes Antriebsrad. Gemäß einer Ausgestaltungsvariante bildet die Spindelmutter das antriebsseitige Antriebselement des Stelltriebs, und die Gewindespindel das relativ dazu linear verstellbare, ausgangsseitige Abtriebselement. Eine weitere Ausgestaltungsvariante ist entsprechend umgekehrt ausgebildet.

Eine weitere Ausgestaltung sieht vor, dass ein Stelltrieb eine Kugelrampenanordnung, Keilscheibenanordnung oder eine Kippstiftanordnung aufweist. Bei einer Kugelrampenanordnung, auch als Rampenlager bezeichnet, weisen das Antriebs- und Abtriebselement bevorzugt Kurvenscheiben mit gegen die Achse geneigten Laufbahnen oder Rampen auf, zwischen denen in Umfangsrichtung abwälzbare Kugeln angeordnet sind. Eine relative Drehung führt durch die dabei auf den Rampen abrollenden Kugel dazu, dass das Abtriebselement relativ zum Antriebselement axial verlagert wird. Bei einer an sich bekannten Kippstiftanordnung sind Kippstifte derart zwischen Antriebs- und Abtriebselement angeordnet und jeweils in Umfangsrichtung abgestützt, dass sie bei einer relativen Drehung je nach Drehrichtung stärker oder schwächer gegen die Achse geneigt sind, wodurch der Abstand zwischen Antriebs- und Abtriebselement ebenfalls verstellbar ist.

In der Stellvorrichtung sind gemäß einer weiteren Ausgestaltung vorteilhafterweise zwei gleichartig wirkende Stelltriebe als erste und zweite Stelltriebe miteinander kombiniert, insbesondere zwei Spindeltriebe. Gemäß einer vorteilhaften Ausgestaltungsvariante ist aber auch vorgesehen, zwei unterschiedliche Bauarten miteinander zu kombinieren, insbesondere eine Kugelrampenanordnung als ersten Stelltrieb, und einen Spindeltrieb als zweiten Stelltrieb zur Justierung des Luftspalts. Dabei können die jeweiligen charakteristischen Eigenschaften jeder Bauform optimal ausgenutzt werden. Insbesondere kann mit einer Kugelrampenanordnung mit geringem Aufwand eine nichtlineare Verstellcharakteristik realisiert werden, und/oder zumindest abschnittweise selbsthemmende Eigenschaften, und/oder eine definierte Totpunkt- oder Strecklage, die einen definierten Verstellweg ermöglicht. Die Realisierung der genannten positiven Eigenschaften kann zumindest teilweise eine präzise Vorgabe des Luftspalts erfordern, was mittels der vorgeschlagenen Reibkupplung realisiert werden kann.

Zum Betreiben einer elektromechanischen Bremsvorrichtung in einem Kraftfahrzeug, insbesondere einer erfindungsgemäß ausgebildeten Bremsvorrichtung, ist vorgesehen, dass eine Bremsvorgabe erfasst und unter Berücksichtigung wenigstens eines weiteren Parameters des Kraftfahrzeugs eine Sollvorgabe für den ersten Elektromotor und/oder den zweiten Elektromotor bestimmt wird und der erste Elektromotor und/oder der zweite Elektromotor über einen Steuerpfad mit einer Treiberstufe und einem Leistungsmodul zur Umsetzung der bestimmten Sollvorgabe angesteuert wird.

Insbesondere umfasst die für das Verfahren zum Betreiben der Bremsvorrichtung vorgesehene Bremsvorrichtung eine Stellvorrichtung und ein damit verbundenes Bremsteil, das von der Stellvorrichtung entlang einer Achse verstellbar und mit einem Gegenbremsteil in Bremseingriff bringbar ist, wobei die Stellvorrichtung einen ersten Stelltrieb und einen zweiten Stelltrieb aufweist und die Stellvorrichtung zur Realisierung einer Verstellbewegung einen ersten dreiphasigen Elektromotor und einen zweiten dreiphasigen Elektromotor mit einer Schaltungsanordnung zum Betreiben der Elektromotoren umfasst, wobei die Schaltungsanordnung einen ersten Steuerpfad mit einem ersten Leistungsmodul zur Steuerung des ersten Elektromotors und einen zweiten Steuerpfad mit einem zweiten Leistungsmodul zur Steuerung des zweiten Elektromotors umfasst, und wobei die Schaltungsanordnung eine erste Recheneinheit und eine erste Treiberstufe umfasst, wobei die erste Recheneinheit ausgebildet ist, anhand von erfassten Parametern eine Elektromotor-Sollvorgabe zu bestimmen und über eine Treiberstufe ein Leistungsmodul zur Beeinflussung der Motorströme anzusteuern, sodass die Elektromotor-Sollvorgabe umgesetzt wird.

Bei einem Verfahren zum Betrieb einer elektromechanischen Bremsvorrichtung, die eine Stellvorrichtung umfassend einen ersten Stelltrieb und einen seriell damit gekoppelten Stelltrieb aufweist, und welche auf ein Bremsteil wirkt, das in Richtung einer Achse mit einem Gegenbremsteil in Bremseingriff bringbar ist, wobei der erste Stelltrieb ein drehend antreibbares erstes Antriebsrad aufweist, auf das zur Betätigung ein erstes Antriebsmoment aufgebacht werden kann, insbesondere mittels des ersten Elektromotors, und der zweite Stelltrieb ein drehend antreibbares, zu dem ersten Antriebsrad koaxiales zweites Antriebsrad aufweist, auf das zur Betätigung ein zweites Antriebsmoment aufgebracht werden kann, insbesondere mittels des zweiten Elektromotors, wobei zwischen dem ersten Antriebsrad und dem zweiten Antriebsrad eine Kupplungsvorrichtung angeordnet ist, ist vorteilhafterweise vorgesehen, dass die Kupplungsvorrichtung als Reibkupplung ausgebildet ist und ein vorgebbares Kupplungsmoment aufweist, bei dessen Überschreiten das erste Antriebsrad relativ zum zweiten Antriebsrad gleitend durchrutscht, wobei zur Betätigung des ersten Stelltriebs das erste Antriebsrad und das zweite Antriebsrad synchron angetrieben werden, sodass der zweite Stelltrieb unbetätigt bleibt, und zur Betätigung des zweiten Stelltriebs das zweite Antriebsrad angetrieben wird, und das erste Antriebsrad relativ dazu stillgesetzt wird, sodass die Reibkupplung durchrutscht und der erste Stelltrieb unbetätigt bleibt. Die vorangehend im Zusammenhang mit der erfindungsgemäßen Bremsvorrichtung genannten Merkmale können einzeln und in Kombinationen zur Umsetzung des vorgeschlagenen Verfahrens genutzt werden. Zur Verstellung des ersten Stelltriebs wird mittels des ersten dreiphasigen Elektromotors, insbesondere eines ersten elektrischen Stellmotors, ein Stellmoment in das erste Antriebsrad eingekoppelt. Entsprechend wird der zweite Stelltrieb durch den zweiten dreiphasigen Elektromotor, insbesondere einen zweiten elektrischen Stellmotor, angetrieben.

Im normalen Bremsbetrieb werden das erste und das zweite Antriebsrad synchron rotiert. Dies kann zum einen dadurch erfolgen, dass das erste und zweite Antriebsrad von dem ersten und zweiten Elektromotor mit synchronisierten Antriebsmomenten angetrieben werden. Zum anderen kann das zweite Antriebsrad beim Antrieb des ersten Antriebsrads durch die Kupplungsvorrichtung synchron mitgenommen werden, solange das übertragene Antriebsmoment unterhalb des Kupplungsmoments bleibt. In diesem Betriebsmodus bleibt der zweite Stelltrieb unbetätigt, und dreht als Ganzes zusammen mit dem Bremselement leer mit.

Gemäß einer weiteren vorteilhaften Ausgestaltung kann bei einem Verfahren zum Betreiben eine Betriebsbremse die Kupplungsvorrichtung beim Überschreiten des Kupplungsmoments zur Justierung des Luftspalts kontinuierlich und gleichmäßig gleitend durchrutschen. Dies wird insbesondere dadurch realisiert, dass das Antriebsrad des ersten Stelltriebs festgesetzt wird, insbesondere durch eine Bremse oder eine entsprechende Ansteuerung des ersten Elektromotors, während durch den zweiten Elektromotor ein zweites Antriebsmoment auf das zweite Antriebsrad aufgebracht wird, welches größer ist als das Kupplungsmoment. Dadurch wird das zweite Antriebsrad relativ zum ersten Antriebsrad verdreht, und durch Betätigung des zweiten Stelltriebs kann der Luftspalt kontinuierlich und präzise justiert werden, sodass eine kontinuierlich fortschreitende Abnutzung des Bremselements beziehungsweise des Bremsbelags optimal ausgeglichen werden kann.

Eine weitere vorteilhafte Ausgestaltung des Verfahrens sieht vor, dass das erste Antriebsrad und das zweite Antriebsrad zur Erzeugung eines synchronen Antriebs durch die Reibkupplung drehmomentschlüssig gekuppelt werden. Dabei ist kein synchroner Antrieb der beiden Antriebsräder durch die Elektromotoren erforderlich. Eventuelle Drehmomentdifferenzen können innerhalb vorgegebener Toleranzen ausgeglichen werden.

Es kann mit Vorteil vorgesehen sein, dass bei der Betätigung des ersten Stelltriebs ein höheres Kupplungsmoment vorgegeben wird, als bei der Betätigung des zweiten Stelltriebs. Der erste Stelltrieb wird durch synchronen Antrieb des ersten und des zweiten Antriebsrads betätigt. Das Reibelement und das Gegenreibelement werden durch die Federkraft des Federelements gegeneinander vorgespannt, und zusätzlich wirkt entgegengesetzt zur Federkraft die Verstellkraft des ersten Stelltriebs. Dadurch wird ein relativ hohes Kupplungsmoment realisiert. Wird hingegen zur Justierung des Luftspalts nur das zweite Antriebsrad gedreht, so wirkt allein die Federkraft, sodass ein niedrigeres Kupplungsmoment eingestellt wird. Dadurch wird die Justierung des Luftspalts erleichtert.

Weitere vorteilhafte Einzelheiten, Merkmale und Ausgestaltungsdetails der Erfindung werden im Zusammenhang mit den in den Figuren (nachfolgend insbesondere Fig.: Figur) dargestellten Ausführungsbeispielen näher erläutert. Dabei zeigt:
- Fig. 1: ein Ausführungsbeispiel für eine erfindungsgemäß ausgebildete Bremsvorrichtung in einer schematischen perspektivischen Ansicht;
- Fig. 2: eine seitliche Ansicht der Bremsvorrichtung gemäß Fig. 1;
- Fig. 3: ein Ausführungsbeispiel für eine erfindungsgemäß ausgebildete Stellvorrichtung der Bremsvorrichtung gemäß Fig. 1 freigestellt in einer schematischen perspektivischen Ansicht;
- Fig. 4: einen Schnitt Q-Q durch die Bremsvorrichtung gemäß Fig. 1;
- Fig. 5: den ersten Stelltrieb der Bremsvorrichtung gemäß Fig. 1 freigestellt in einer schematischen perspektivischen Darstellung;
- Fig. 6: eine vergrößerte Detailansicht der Stellvorrichtung aus Fig. 4; und
- Fig. 7: ein Ausführungsbeispiel für eine erfindungsgemäß ausgebildete Schaltungsanordnung zum Betreiben der Elektromotoren einer erfindungsgemäß ausgestalteten Bremsvorrichtung.

In den verschiedenen Figuren sind gleiche Teile in der Regel mit den gleichen Bezugszeichen versehen und werden daher mitunter auch jeweils nur im Zusammenhang mit einer der Figuren erläutert.

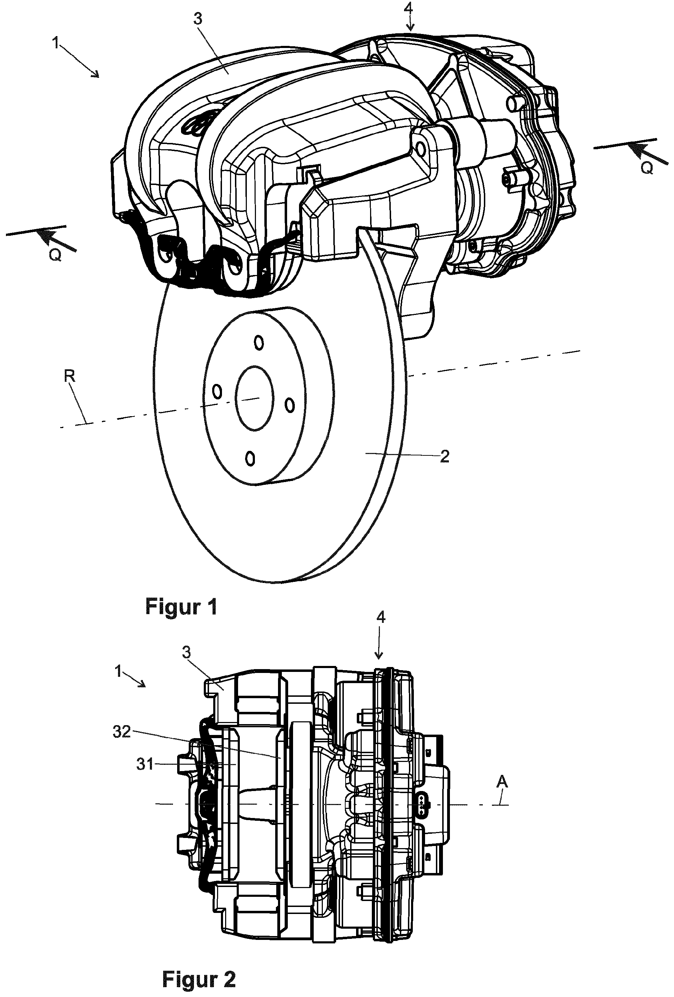

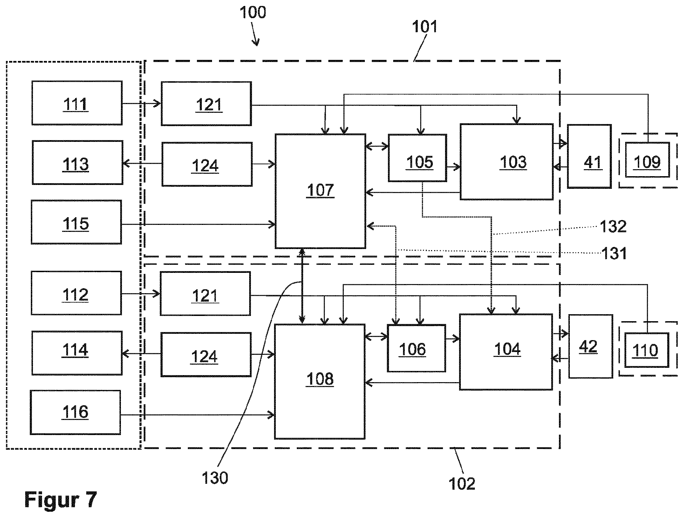

Unter Bezugnahme auf Fig. 1 bis Fig. 6 wird zunächst insbesondere ein vorteilhafter konstruktiver Aufbau eines Ausführungsbeispiels für eine erfindungsgemäß ausgebildete Bremsvorrichtung 1 beschrieben, wobei unter Bezugnahme auf Fig. 7 eine vorteilhafte Ausgestaltung einer Schaltungsanordnung 100 zum Betreiben des ersten Elektromotors 41 und des zweiten Elektromotors 42 der Bremsvorrichtung 1 in einem Kraftfahrzeug beschrieben wird.

Beispielsweise kann bei einem zweirädrigen Fahrzeug, welches als Kraftrad ausgebildet sein kann, je Rad eine Bremsvorrichtung 1 vorgesehen sein. Bei einem vierrädrigen Fahrzeug, welches beispielsweise als Personenkraftwagen, Lastkraftwagen oder Kraftomnibus ausgebildet sein kann, kann ebenfalls je Rad eine Bremsvorrichtung 1 vorgesehen sein. Dabei weist bevorzugt jede der Bremsvorrichtungen 1 jeweils eine Schaltungsvorrichtung 100 auf, sprich jede Bremsvorrichtung 1 hat ihre eigene Schaltungsanordnung 100, die jeweils von den Schaltungsvorrichtungen 100 der anderen Bremsvorrichtungen 1 separat und eigenständig ausgebildet ist. Insbesondere ist aber vorgesehen, dass die Schaltungsanordnungen 100 der Bremsvorrichtungen 1 Daten miteinander austauschen können, insbesondere bezüglich einer Raddrehzahl des der jeweiligen Bremsvorrichtung 1 zugeordneten Rades und/oder eine Funktionsbeeinträchtigung einer der Bremsvorrichtungen 1.

Fig. 1 zeigt die Bremsvorrichtung 1 als Ganzes, wobei die Bremsvorrichtung 1 als Scheibenbremse ausgebildet ist. Die Bremsvorrichtung 1 umfasst in diesem Ausführungsbeispiel eine Bremsscheibe 2, die ein Gegenbremsteil bildet und bei einem bestimmungsgemäßen Einsatz in einem Kraftfahrzeug mit einem hier nicht dargestellten, um eine Radachse R rotierbaren Fahrzeugrad verbunden ist. Ein Bremssattel 3 umgreift die beiden axialen Stirnflächen der Bremsscheibe 2. Die Bremsscheibe 2 ist in diesem Ausführungsbeispiel als unbelüftete Bremsscheibe aus Vollmaterial ausgebildet. Gemäß einer hier nicht gezeigten Ausgestaltungsvariante kann diese insbesondere auch als innenbelüftete Bremsscheibe ausgebildet sein.

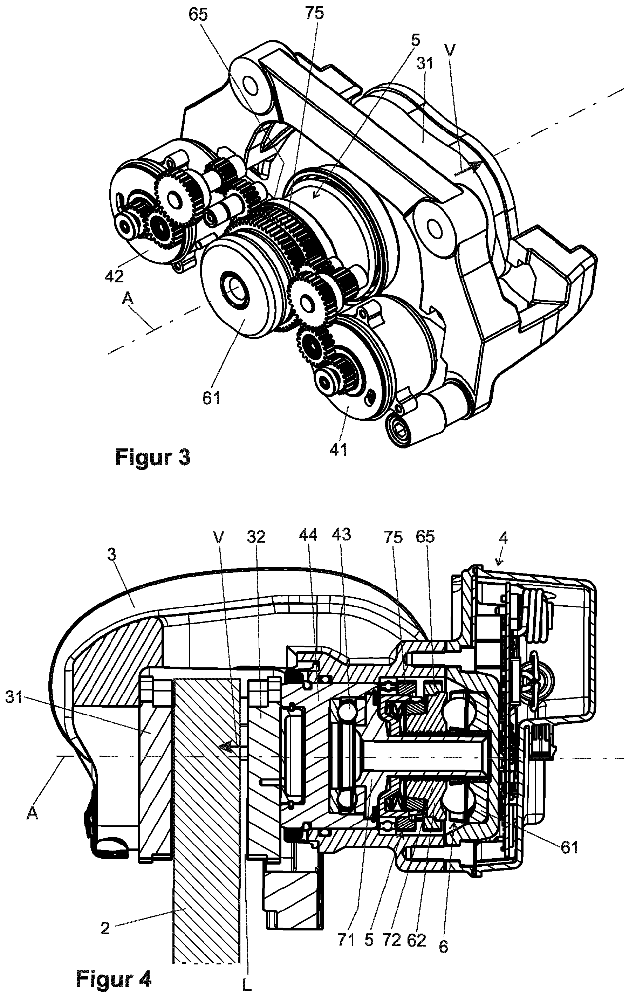

An dem Bremssattel 3 der Bremsvorrichtung 1 ist ein elektrischer Bremsaktuator 4 angebracht, die in Fig. 3 in einer separaten, freigestellten schematischen perspektivischen Ansicht gezeigt ist, und unter Bezugnahme auf Fig. 4 bis Fig. 7 im Detail erläutert wird. Der Bremsaktuator 4 umfasst eine Stellvorrichtung 5 die sich axial in Richtung einer Achse A erstreckt, welche parallel zur Radachse R liegt und die Verstellrichtung V der Stellvorrichtung 5 angibt.

Wie in der Schnittdarstellung von Fig. 4 längs der Achse A erkennbar ist, ist die Bremsscheibe 2 axial zwischen zwei Bremsbelägen 31 und 32 angeordnet. Der eine Bremsbelag 31 ist auf der dem Bremsaktuator 4 abgewandten Seite fest an dem Bremssattel 3 abgestützt. Der andere Bremsbelag 32, der ein Bremsteil im Sinne der Erfindung bildet, ist an der Stellvorrichtung 5 angebracht und von dieser in der durch die Achse A gegebenen, axialen Verstellrichtung V zur Erzeugung des Bremseingriffs auf die Bremsscheibe 2 zu verstellbar, wie in Fig. 4 mit dem Pfeil angedeutet ist. Im unbetätigten Zustand der Bremsvorrichtung 1 befindet sich zwischen der Bremsscheibe 2 und dem verstellbaren Bremsbelag 32 ein axialer Luftspalt L, der in Fig. 4 schematisch übertrieben breit eingezeichnet ist.

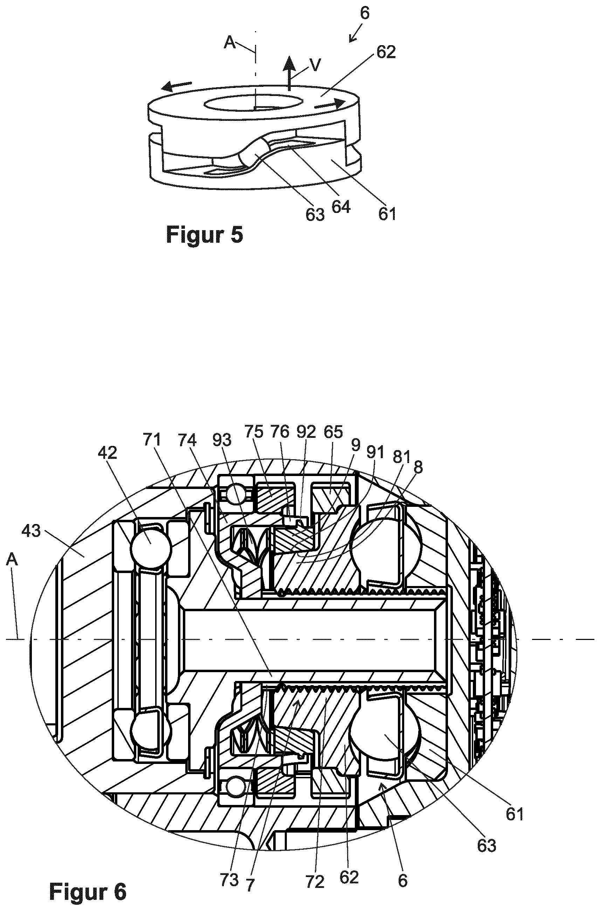

Der Aufbau der Stellvorrichtung 5 ist in Fig. 4 und in dem vergrößerten Ausschnitt daraus in Fig. 6 dargestellt. Die Stellvorrichtung 5 umfasst einen ersten Stelltrieb 6, der ein Rampenlager aufweist, und einen damit axial, hier axial bezüglich der Achse A, seriell gekoppelten zweiten Stelltrieb 7, der einen Spindeltrieb aufweist. Der erste Stelltrieb 6, der in dem gezeigten Ausführungsbeispiel als Rampenlager ausgebildet ist, umfasst eine axial und drehfest an dem Bremsaktuator 4 abgestützte, antriebseitige Kurvenscheibe 61 und eine abtriebseitige Kurvenscheibe 62. Zwischen den Kurvenscheiben 61 und 62 sind Kugeln 63 angeordnet. Wie in der schematisch freigestellten Ansicht von Fig. 5 erkennbar ist, weisen die Kurvenscheiben 61 und 62 einander axial gegenüberliegende rampenartige, schräg zur Achse A liegende Laufbahnen 64 auf, zwischen denen Kugeln 63 abwälzbar sind. Eine Drehung der abtriebseitigen Kurvenscheibe 62, in Fig. 5 oben, relativ zu der feststehenden antriebsseitigen Kurvenscheibe 61 - wie schematisch mit den gebogenen Pfeilen angedeutet - führt zu einer linearen Verstellung der abtriebseitigen Kurvenscheibe 62 in der Verstellrichtung V parallel zur Achse A. Dadurch kann der Bremsbelag 32, wie in Fig. 4 eingezeichnet, durch Betätigung des ersten Stelltriebs 6 in Bremseingriff gebracht werden.

Die Kurvenscheibe 62 ist mit einem koaxialen Zahnrad 65 verbunden, welches als Stirnrad ausgebildet ist und ein Antriebsrad bildet. Das Zahnrad 65 steht im Getriebeeingriff mit einem ersten dreiphasigen Elektromotor 41, der hier als Stellmotor ausgebildet ist, und insbesondere ein Permanentmagnet-Synchronmotor sein kann. Dieser erste Elektromotor 41 ermöglicht den drehenden Antrieb der Kurvenscheibe 62 und damit eine Betätigung des ersten Stelltriebs 6. Über eine Schaltungsanordnung, wie insbesondere nachfolgend unter Bezugnahme auf Fig. 7 näher erläutert, wird der erste Elektromotor 41 betrieben.

Der zweite Stelltrieb 7, der im gezeigten Beispiel als Spindeltrieb ausgebildet ist, weist abtriebseitig eine Gewindespindel 71 auf, die in das Innengewinde einer antriebseitigen Spindelmutter 72 eingreift. Dieses Innengewinde ist in der abtriebseitigen Kurvenscheibe 62 des ersten Stelltriebs 6 ausgebildet, sodass die Funktionen der abtriebseitigen Kurvenscheibe 62 und der antriebsseitigen Spindelmutter 72 vorteilhafterweise in einem Bauelement vereinigt sind. Die Gewindespindel 71 ist über ein Nabenteil 74 mit einem koaxialen Zahnrad 75 verbunden, welches axial fixiert in dem Bremsaktuator 4 drehbar gelagert ist. Über Mitnehmer 73, die insbesondere radial vorstehende Vorsprünge oder Zähne aufweisen, die in axiale Schlitze des Nabenteils 74 axial verschieblich eingreifen, ist die Gewindespindel drehmomentschlüssig, aber axial verlagerbar mit dem Zahnrad 75 gekuppelt. Das Zahnrad 75 kann wie das Zahnrad 65 als Stirnrad ausgeführt sein und ist zu diesem benachbart koaxial angeordnet. Dieses Zahnrad 75 steht im Getriebeeingriff mit einem zweiten dreiphasigen Elektromotor 42, der hier als Stellmotor ausgebildet ist, und insbesondere ebenfalls ein Permanentmagnet-Synchronmotor sein kann. Dieser zweite Elektromotor ermöglicht den drehenden Antrieb der Gewindespindel 71 und damit eine Betätigung des zweiten Stelltriebs 7, wobei dieser zweite Elektromotor 42 ebenfalls über die bereits genannte Schaltungsanordnung, wie insbesondere nachfolgend unter Bezugnahme auf Fig. 7 näher erläutert, betrieben wird.

Die Gewindespindel 71 ist über ein Drucklager 43, insbesondere wie dargestellt ein Axialwälzlager, axial mit einem Druckstück 44 verbunden, an dem der verlagerbare Bremsbelag 32 angebracht ist, wie in Fig. 4 erkennbar ist. Das Druckstück 44 kann auch als Kolben bezeichnet werden.

Die Kupplungsvorrichtung der Bremsvorrichtung 1 weist ein Reibelement 8 auf, welches als koaxialer, konischer Ansatz von der Kurvenscheibe 62 auf den zweiten Stelltrieb 7 zu gerichtet ist. Der konische Ansatz weist eine außen auf einem Außenkonus angeordnete konische Reibfläche 81 auf. Das Reibelement 81 kann bevorzugt einstückig mit der Kurvenscheibe 62 / Spindelmutter 72 ausgebildet sein.

Das Reibelement 8 ist im Kupplungseingriff reibschlüssig mit einem Gegenreibelement 9 gekuppelt. Dabei taucht der konische Ansatz axial in eine korrespondierende konische Öffnung des Gegenreibelements 9 ein, welche eine in einem Innenkonus angeordnete konische Reibfläche 91 aufweist. Im Kupplungseingriff liegen die Reibfläche 81 und die Gegenreibfläche 91 reibschlüssig gegeneinander an, wie in Fig. 6 erkennbar ist. Das Gegenreibelement 9 ist über Mitnehmer 92, die in korrespondierende Schlitze 76 in dem Nabenteil 74 oder dem Zahnrad 75 axial verschiebbar eingreifen, drehmomentschlüssig, aber axial verlagerbar mit dem Zahnrad 75 gekuppelt. Zwischen dem Zahnrad 75 oder dem damit verbundenen Nabenteil 74 und dem Gegenreibelement 9 ist ein Federelement 93 angeordnet. Durch dessen axial wirksame Federkraft wird das Gegenreibelement 9 gegen das Reibelement 8 elastisch verspannt. Dadurch wird ein definiertes Kupplungsmoment der durch das Reibelement 8 und das Gegenreibelement 9 gebildeten Reibkupplung erzeugt.

Zur Betätigung der Bremsvorrichtung 1 werden die Zahnräder 65 und 75 synchron rotiert, sodass der erste Stelltrieb 6 einen Arbeitshub in Verstellrichtung V ausführt, sodass der Bremsbelag 32 den Luftspalt L passiert und in Bremseingriff mit der Bremsscheibe 2 kommt. Der synchrone Antrieb der Zahnräder 65 und 75 kann durch eine Synchronisierung der Antriebsgeschwindigkeiten des ersten Elektromotors 41 und des zweiten Elektromotors 42 bewerkstelligt werden, oder durch nur einen der Elektromotoren 41 oder 42, während der jeweils andere Elektromotor 42 oder 41 leer mitläuft. Dann sorgt der reibschlüssige Kupplungseingriff zwischen dem Reibelement 8 und dem Gegenreibelement 9 für eine synchrone Drehung der Zahnräder 65 und 75.

Zur Justierung der Breite des Luftspalts L wird das Zahnrad 65 festgesetzt oder blockiert, insbesondere durch eine entsprechende Ansteuerung des ersten Elektromotors 41. Durch den zweiten Elektromotor 42 wird das Zahnrad 75 relativ zum Zahnrad 65 verdreht, wobei die Reibkupplung kontinuierlich gleitend durchrutscht. Entsprechend wird der zweite Stelltrieb 7 gleichmäßig verstellt, wodurch die Breite des Luftspalts L ebenfalls kontinuierlich eingestellt und angepasst werden kann, um beispielsweise eine Abnutzung des Bremsbelags 32 zu kompensieren.

Dadurch, dass das Reibelement 8 und das Gegenreibelement 9 ganz oder zumindest teilweise innerhalb der Zahnräder 65 und 75 angeordnet sind, kann eine besonders kompakte Bauweise realisiert werden.

Die in Fig. 1 bis Fig. 6 dargestellten Bremsvorrichtungen 1 sind als Schwimmsattelbremse, auch als Faustsattelbremse bezeichnet, ausgebildet. Dabei wird der Bremsbelag 32 durch das Druckstück 44, und der Bremsbelag 31 durch den gegenüber der Bremsscheibe 2 in Richtung der Achse A verschiebbaren Bremssattel 3 an die Bremsscheibe 2 gedrückt. Alternativ kann die vorgeschlagene Lösung auch bei einer Festsattelbremse zum Einsatz kommen.

Eine vorteilhafte Schaltungsanordnung 100 zum Betreiben der Elektromotoren 41, 42 der Stellvorrichtung 5 und deren Architektur ist in Fig. 7 als Blockschaltbild dargestellt. Die Schaltungsanordnung 100 umfasst in diesem Ausführungsbeispiel einen ersten Steuerpfad 101 mit einer ersten Recheneinheit 107, einer ersten Treiberstufe 105 und einem ersten Leistungsmodul 103 zur Steuerung des ersten Elektromotors 41 und bedarfsweise zur Steuerung des zweiten Elektromotors 42. Weiter sind dem ersten Steuerpfad 101 ein erstes Anschlusselement 111 zum Anschluss an eine Spannungsquelle eines Kraftfahrzeugs, eine erste Schnittstelle 113 zum Anschluss an einen Kommunikationsbus eines Kraftfahrzeugs und eine dritte Schnittstelle 115 zum Anschließen eines Raddrehzahlsensors eines Kraftfahrzeugs zugeordnet. Über ein EMI-Filter 121 werden der ersten Recheneinheit 107, die insbesondere als Mikrocontrollerschaltung ausgebildet ist, der ersten Treiberschaltung 105 und dem ersten Leistungsmodul 103 die für den Betrieb benötigte Energie bereitgestellt. Zur Bestimmung einer Elektromotor-Sollvorgabe ist die erste Recheneinheit 107 zum Empfang von einer Vielzahl von Daten ausgebildet. So kann die erste Recheneinheit 107 Rotorpositionssignale von einem dem ersten Elektromotor 41 zugeordneten Rotorpositionssensor 109 empfangen. Zudem ist die Recheneinheit 107 zum Empfang eines Sensorsignals eines Raddrehzahlsensors als weiteren Parameter über die dritte Schnittstelle 115 ausgebildet. Weitere Fahrzeugparameter, wie eine von einem Fahrzeugnutzer oder einem Fahrerassistenzsystem vorgegebene Bremsvorgabe oder eine aktuelle Fahrgeschwindigkeit des Kraftfahrzeugs, kann die Recheneinheit 107 mittels einer Transceiver-Einheit 124 über die erste Schnittstelle 113 über einen Kommunikationsbus des Kraftfahrzeugs, insbesondere einen CAN-Bus, empfangen, wobei auch Daten über die Transceiver-Einheit 124 und die erste Schnittstelle 113 an den Kommunikationsbus übertragen werden können. Weiter Daten kann die erste Recheneinheit 107 von dem ersten Leistungsmodul 103 empfangen.

In diesem Ausführungsbeispiel für die Schaltungsanordnung 100 umfasst die Schaltungsanordnung 100 einen im Wesentlichen vollständig zu dem ersten Steuerpfad 101 redundanten zweiten Steuerpfad 102. Dieser zweite Steuerpfad 102 umfasst daher eine zweite Recheneinheit 108, eine zweite Treiberstufe 106 und ein zweites Leistungsmodul 104 zur Steuerung des zweiten Elektromotors 42 und bedarfsweise zur Steuerung des ersten Elektromotors 41. Dem zweiten Steuerpfad 102 sind dazu ein zweites Anschlusselement 112 zum Anschluss an eine Spannungsquelle eines Kraftfahrzeugs, eine zweite Schnittstelle 114 zum Anschluss an einen Kommunikationsbus eines Kraftfahrzeugs und eine vierte Schnittstelle 116 zum Anschließen eines Raddrehzahlsensors eines Kraftfahrzeugs zugeordnet. Über ein EMI-Filter 121 werden der zweiten Recheneinheit 108, die insbesondere ebenfalls als Mikrocontrollerschaltung ausgebildet ist, der zweiten Treiberschaltung 106 und dem zweiten Leistungsmodul 104 die für den Betrieb benötigte Energie bereitgestellt. Zur Bestimmung einer Elektromotor-Sollvorgabe ist die zweite Recheneinheit 108 zum Empfang von einer Vielzahl von Daten ausgebildet. So kann die zweite Recheneinheit 108 Rotorpositionssignale von einem dem zweiten Elektromotor 42 zugeordneten Rotorpositionssensor 110 empfangen. Zudem ist die zweite Recheneinheit 108 zum Empfang eines Sensorsignals eines Raddrehzahlsensors als weiteren Parameter über die vierte Schnittstelle 116 ausgebildet. Weitere Fahrzeugparameter, wie eine von einem Fahrzeugnutzer oder einem Fahrerassistenzsystem vorgegebene Bremsvorgabe oder eine aktuelle Fahrgeschwindigkeit des Kraftfahrzeugs, kann die zweite Recheneinheit 108 mittels einer Transceiver-Einheit 124 über die zweite Schnittstelle 114 über einen Kommunikationsbus des Kraftfahrzeugs, insbesondere einen CAN-Bus, empfangen, wobei auch Daten über die Transceiver-Einheit 124 und die zweite Schnittstelle 114 an den Kommunikationsbus übertragen werden können. Weiter Daten kann die zweite Recheneinheit 108 von dem zweien Leistungsmodul 104 empfangen.

In einem Normalbetrieb ist vorgesehen, dass die erste Recheneinheit 107 eine Elektromotor-Sollvorgabe für den ersten Elektromotor 41 bestimmt und dass die zweite Recheneinheit 108 eine Elektromotor-Sollvorgabe für den zweiten Elektromotor 42 bestimmt. Über die erste Treiberstufe 105 steuert die erste Recheneinheit 107 dabei das erste Leistungsmodul 103 zur Beeinflussung der Motorströme an, sodass die für den ersten Elektromotor 41 bestimmte Elektromotor-Sollvorgabe von dem ersten Elektromotor 41 umgesetzt wird. Entsprechend steuert die zweite Recheneinheit 108 über die zweite Treiberstufe 106 das zweite Leistungsmodul 104 an, damit von dem zweiten Elektromotor 42 die von der zweiten Recheneinheit 108 bestimmte Elektromotor-Sollvorgabe umgesetzt wird.

In diesem Ausführungsbeispiel sind die erste Recheneinheit 107 und die zweite Recheneinheit 108 zudem über eine Signalverbindung 130 zum Austausch von Signalen miteinander verbunden, sodass Signale zwischen dem ersten Steuerpfad 101 und dem zweiten Steuerpfad ausgetauscht werden können. Über diese Signalverbindung 130 kann insbesondere bei einer erkannten Funktionsstörung im Hinblick auf eine der Recheneinheiten die Steuerung allein von der weiterhin funktionsfähigen Recheneinheit übernommen werden, wobei der funktionsfähigen Recheneinheit die zur Bestimmung der Sollvorgabe für Elektromotor desjenigen Steuerpfades, dessen Recheneinheit funktionsbeeinträchtigt ist, notwendigen Daten und Parameter über die Signalverbindung 130 bereitgestellt werden. Wie obenstehend aber erläutert, ist es für die Umsetzung eines Bremseingriffs aber auch möglich, diesen durch Ansteuerung nur eines Elektromotors zu realisieren.

Gemäß einer hier nur mittels der Signalverbindung 131 angedeuteten kostengünstigeren Ausgestaltungsvariante kann die Schaltungsanordnung 100 auch nur eine erste Recheneinheit 107 umfassen. Die zweite Recheneinheit 108 würde dann entfallen. Die notwendigen Daten und Parameter werden bei dieser Ausgestaltungsvariante dann direkt an die erste Recheneinheit 107 übertragen, dann direkt über eine Signalverbindung 131 über die zweite Treiberstufe 106 das zweite ein Leistungsmodul 104 und darüber den zweiten Elektromotor 42 ansteuert.

Gemäß einer noch kostengünstigeren Ausgestaltungsvariante, die hier ebenfalls nur mittels einer weiteren Signalverbindung 132 angedeutet ist, entfällt neben der zweiten Recheneinheit 108 auch die zweite Treiberstufe 106, wobei die erste Recheneinheit 107 in dem Fall ausgebildet ist, über die erste Treiberstufe 105 das zweite Leistungsmodul 104 und damit den zweiten Elektromotor 42 anzusteuern.

Da die Steuerpfade 101, 102 der Schaltungsanordnung 100 redundant ausgelegt sind und zudem ein Bremseingriff sogar unter Nutzung nur eines der Elektromotoren 41, 42 realisiert werden kann, ist eine besonders hohe Ausfallsicherheit gegeben.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Bremsvorrichtung
- 2: Bremsscheibe (Gegenbremsteil)
- 3: Bremssattel
- 31, 32: Bremsbelag (Bremsteil)
- 4: Bremsaktuator
- 41, 42: erster, zweiter Elektromotor
- 43: Drucklager
- 44: Druckstück
- 5: Stellvorrichtung
- 6: erster Stelltrieb
- 61: Kurvenscheibe
- 62: Kurvenscheibe (integriert mit Spindelmutter 72)
- 63: Kugel
- 64: Laufbahn
- 65: Zahnrad (erstes Antriebsrad)
- 7: zweiter Stelltrieb
- 71: Gewindespindel
- 72: Spindelmutter (integriert mit Kurvenscheibe 62)
- 73: Mitnehmer
- 74: Nabenteil
- 75: Zahnrad (zweites Antriebsrad)
- 76: Schlitz
- 8: Reibelement
- 81: Reibfläche
- 9: Gegenreibelement
- 91: Gegenreibfläche
- 92: Mitnehmer
- 93: Federelement
- 100: Schaltungsanordnung
- 101: erster Steuerpfad
- 102: zweiter Steuerpfad
- 103: erstes Leistungsmodul
- 104: zweites Leistungsmodul
- 105: erste Treiberstufe
- 106: zweite Treiberstufe
- 107: erste Recheneinheit
- 108: zweite Recheneinheit
- 109: erster Rotorpositionssensor
- 110: zweiter Rotorpositionssensor
- 111: erstes Anschlusselement
- 112: zweites Anschlusselement
- 113: erste Schnittstelle
- 114: zweite Schnittstelle
- 115: dritte Schnittstelle
- 116: vierte Schnittstelle
- 121: EMI-Filter
- 124: Transceiver-Einheit
- 130: Kommunikationsverbindung zwischen den Recheneinheiten (107, 108)
- 131: Verbindung zwischen erster Recheneinheit (107) und zweiter Treiberstufe (106)
- 132: Verbindung zwischen erster Recheneinheit (107) und zweitem Leistungsmodul (108)
- A: Achse
- R: Radachse
- V: Verstellrichtung
- L: Luftspalt

## Patentansprüche

1. Elektromechanische Bremsvorrichtung (1) für ein Kraftfahrzeug umfassend eine Stellvorrichtung (5) und ein damit verbundenes Bremsteil (32), das von der Stellvorrichtung (5) entlang einer Achse (A) verstellbar und mit einem Gegenbremsteil (2) in Bremseingriff bringbar ist, wobei die Stellvorrichtung (5) einen ersten Stelltrieb (6) und einen zweiten Stelltrieb (7) aufweist und die Stellvorrichtung (5) zur Realisierung einer Verstellbewegung einen ersten dreiphasigen Elektromotor (41) und einen zweiten dreiphasigen Elektromotor (42) mit einer Schaltungsanordnung (100) zum Betreiben der Elektromotoren (41, 42) umfasst, **dadurch gekennzeichnet, dass** die Schaltungsanordnung (100) einen ersten Steuerpfad (101) mit einem ersten Leistungsmodul (103) zur Steuerung des ersten Elektromotors (41) und einen zweiten Steuerpfad (102) mit einem zweiten Leistungsmodul (104) zur Steuerung des zweiten Elektromotors (42) umfasst, und dass die Schaltungsanordnung (100) eine erste Recheneinheit (107) und eine erste Treiberstufe (105) umfasst, wobei die erste Recheneinheit (107) ausgebildet ist, anhand von erfassten Parametern eine Elektromotor-Sollvorgabe zu bestimmen und über eine Treiberstufe (105, 106) ein Leistungsmodul (103, 104) zur Beeinflussung der Motorströme anzusteuern, sodass die Elektromotor-Sollvorgabe umgesetzt wird.

2. Bremsvorrichtung (1) nach Anspruch 1, **dadurch gekennzeichnet, dass** der zweite Stelltrieb (7) seriell mit dem ersten Stelltrieb (6) gekoppelt ist, wobei der erste Stelltrieb (6) ein drehend antreibbares erstes Antriebsrad (65) aufweist, und der zweite Stelltrieb (7) ein drehend antreibbares, zu dem ersten Antriebsrad (65) koaxiales zweites Antriebsrad (75) aufweist, wobei zwischen dem ersten Antriebsrad (65) und dem zweiten Antriebsrad (75) eine Kupplungsvorrichtung (8, 9) angeordnet ist, und wobei die Kupplungsvorrichtung als Reibkupplung (8, 9) ausgebildet ist mit einem Reibelement (8), das im Kupplungseingriff reibschlüssig mit einem Gegenreibelement (9) verbindbar ist, wobei der erste Elektromotor (41) eine Betätigung des ersten Stelltriebs ermöglicht und der zweite Elektromotor (42) eine Betätigung des zweiten Stelltriebs ermöglicht.

3. Bremsvorrichtung (1) nach Anspruch 1 oder Anspruch 2, **dadurch gekennzeichnet, dass** die Schaltungsanordnung (100) ausgebildet ist, unter Nutzung der ersten Recheneinheit (107) und der ersten Treiberstufe (105) den ersten Elektromotor (41) und den zweiten Elektromotor (42) zu steuern.

4. Bremsvorrichtung (1) nach einem der vorstehenden Ansprüche, **dadurch gekennzeichnet, dass** die Schaltungsanordnung (100) weiter eine zweite Treiberstufe (106) umfasst, wobei die erste Treiberstufe (105) dem ersten Steuerpfad (101) zugeordnet ist, und die zweite Treiberstufe (106) dem zweiten Steuerpfad (102) zugeordnet ist.

5. Bremsvorrichtung (1) nach einem der Ansprüche 1 bis 3, **dadurch gekennzeichnet, dass** die Schaltungsanordnung (100) weiter eine zweite Treiberstufe (106) und eine zweite Recheneinheit (108) umfasst, wobei die erste Treiberstufe (105) und die erste Recheneinheit (107) dem ersten Steuerpfad (101) zugeordnet sind, und die zweite Treiberstufe (106) und die zweite Recheneinheit (108) dem zweiten Steuerpfad (102) zugeordnet sind.

6. Bremsvorrichtung (1) nach Anspruch 5, **dadurch gekennzeichnet, dass** die erste Recheneinheit (107) ausgebildet ist, über die erste Treiberstufe (105) das erste Leistungsmodul (103) zur Beeinflussung der Motorströme des ersten Elektromotors (41) anzusteuern und die zweite Recheneinheit (108) ausgebildet ist, über die zweite Treiberstufe (106) das zweite Leistungsmodul (104) zur Beeinflussung der Motorströme des zweiten Elektromotors (42) anzusteuern.

7. Bremsvorrichtung (1) nach einem der Ansprüche 4 bis 6, **dadurch gekennzeichnet, dass** die erste Recheneinheit (107) ausgebildet ist, über die erste Treiberstufe (105) das erste Leistungsmodul (103) zur Beeinflussung der Motorströme des ersten Elektromotors (41) anzusteuern und über die zweite Treiberstufe (106) das zweite Leistungsmodul (104) zur Beeinflussung der Motorströme des zweiten Elektromotors (42) anzusteuern.

8. Bremsvorrichtung (1) nach einem der vorstehenden Ansprüche, **dadurch gekennzeichnet, dass** dem ersten Elektromotor (41) ein erster Rotorpositionssensor (109) zugeordnet ist und dem zweiten Elektromotor (42) ein zweiter Rotorpositionssensor (110) zugeordnet ist, die jeweils zur Übertragung von Rotorpositionssignalen mit der ersten Recheneinheit (107) und/oder der zweiten Recheneinheit (108) verbunden sind.

9. Bremsvorrichtung (1) nach einem der vorstehenden Ansprüche, **dadurch gekennzeichnet, dass** der erste Steuerpfad (101) ein erstes Anschlusselement (111) zum Anschluss an eine Spannungsquelle eines Kraftfahrzeugs als Energiequelle umfasst und/oder der zweite Steuerpfad (102) ein zweites Anschlusselement (112) zum Anschluss an eine Spannungsquelle eines Kraftfahrzeugs als Energiequelle umfasst.

10. Bremsvorrichtung (1) nach Anspruch 9, **dadurch gekennzeichnet, dass** das erste Anschlusselement (111) und/oder das zweite Anschlusselement (112) ein EMI-Filter (121) umfasst.

11. Bremsvorrichtung (1) nach einem der vorstehenden Ansprüche, **dadurch gekennzeichnet, dass** der erste Steuerpfad (101) eine erste Schnittstelle (113) zum Anschließen an einen Kommunikationskanal eines Kraftfahrzeugs umfasst und/oder der zweite Steuerpfad (102) eine zweite Schnittstelle (114) zum Anschließen an einen Kommunikationskanal eines Kraftfahrzeugs umfasst.

12. Bremsvorrichtung (1) nach einem der vorstehenden Ansprüche, **dadurch gekennzeichnet, dass** der erste Steuerpfad (101) eine dritte Schnittstelle (115) zum Anschließen an einen Raddrehzahlsensor umfasst und/oder der zweite Steuerpfad (102) eine vierte Schnittstelle (116) zum Anschließen an einem Raddrehzahlsensor umfasst.

13. Bremsvorrichtung (1) nach einem der vorstehenden Ansprüche, **dadurch gekennzeichnet, dass** der erste Steuerpfad (101) und/oder der zweite Steuerpfad (102) eine Transceiver-Einheit (124) umfasst.

## Claims

1. An electromechanical braking device (1) for a motor vehicle comprising a positioning device (5) and a brake part (32) connected thereto, which is displaceable by the positioning device (5) along an axis (A) and can be brought into braking engagement with a counter brake part (2), wherein the positioning device (5) has a first positioning drive (6) and a second positioning drive (7) and the positioning device (5), to implement a displacement movement, comprises a first three-phase electric motor (41) and a second three-phase electric motor (42) having a circuit assembly (100) for operating the electric motors (41, 42), **characterized in that** the circuit assembly (100) comprises a first control path (101) having a first power module (103) for controlling the first electric motor (41) and a second control path (102) having a second power module (104) for controlling the second electric motor (42), and **in that** the circuit assembly (100) comprises a first computing unit (107) and a first driver stage (105), wherein the first computing unit (107) is designed to determine an electric motor setpoint specification on the basis of acquired parameters and to actuate a power module (103, 104) to influence the motor currents via a driver stage (105, 106), so that the electric motor setpoint specification is implemented.

2. The braking device (1) as claimed in claim 1, **characterized in that** the second positioning drive (7) is coupled in series with the first positioning drive (6), wherein the first positioning drive (6) has a first drive wheel (65), which is drivable to rotate, and the second positioning drive (7) has a second drive wheel (75), which is drivable to rotate and is coaxial to the first drive wheel (65), wherein a coupling device (8, 9) is arranged between the first drive wheel (65) and the second drive wheel (75), and wherein the coupling device is designed as a friction clutch (8, 9) having a friction element (8), which is connectable in the coupling engagement in a friction-locked manner to a counter friction element (9), wherein the first electric motor (41) enables an operation of the first positioning drive and the second electric motor (42) enables an operation of the second positioning drive.

3. The braking device (1) as claimed in claim 1 or claim 2, **characterized in that** the circuit assembly (100) is designed to control the first electric motor (41) and the second electric motor (42) using the first computing unit (107) and the first driver stage (105).

4. The braking device (1) as claimed in any one of the preceding claims, **characterized in that** the circuit assembly (100) furthermore comprises a second driver stage (106), wherein the first driver stage (105) is assigned to the first control path (101) and the second driver stage (106) is assigned to the second control path (102).

5. The braking device (1) as claimed in any one of claims 1 to 3, **characterized in that** the circuit assembly (100) furthermore comprises a second driver stage (106) and a second computing unit (108), wherein the first driver stage (105) and the first computing unit (107) are assigned to the first control path (101) and the second driver stage (106) and the second computing unit (108) are assigned to the second control path (102).

6. The braking device (1) as claimed in claim 5, **characterized in that** the first computing unit (107) is designed to actuate the first power module (103) to influence the motor currents of the first electric motor (41) via the first driver stage (105) and the second computing unit (108) is designed to actuate the second power module (104) to influence the motor currents of the second electric motor (42) via the second driver stage (106).

7. The braking device (1) as claimed in any one of claims 4 to 6, **characterized in that** the first computing unit (107) is designed to actuate the first power module (103) to influence the motor currents of the first electric motor (41) via the first driver stage (105) and to actuate the second power module (104) to influence the motor currents of the second electric motor (42) via the second driver stage (106).

8. The braking device (1) as claimed in any one of the preceding claims, **characterized in that** a first rotor position sensor (109) is assigned to the first electric motor (41) and a second rotor position sensor (110) is assigned to the second electric motor (42), which are each connected to the first computing unit (107) and/or the second computing unit (108) to transmit rotor position signals.

9. The braking device (1) as claimed in any one of the preceding claims, **characterized in that** the first control path (101) comprises a first connection element (111) for connection to a voltage source of a motor vehicle as an energy source and/or the second control path (102) comprises a second connection element (112) for connection to a voltage source of a motor vehicle as an energy source.

10. The braking device (1) as claimed in claim 9, **characterized in that** the first connection element (111) and/or the second connection element (112) comprises an EMI filter (121).

11. The braking device (1) as claimed in any one of the preceding claims, **characterized in that** the first control path (101) comprises a first interface (113) for connection to a communication channel of a motor vehicle and/or the second control path (102) comprises a second interface (114) for connection to a communication channel of a motor vehicle.

12. The braking device (1) as claimed in any one of the preceding claims, **characterized in that** the first control path (101) comprises a third interface (115) for connection to a wheel speed sensor and/or the second control path (102) comprises a fourth interface (116) for connection to a wheel speed sensor.

13. The braking device (1) as claimed in any one of the preceding claims, **characterized in that** the first control path (101) and/or the second control path (102) comprises a transceiver unit (124).

## Revendications

1. Dispositif de freinage électromécanique (1) pour un véhicule à moteur comprenant un dispositif de positionnement (5) et une pièce de frein (32) reliée à celui-ci, qui est déplaçable par le dispositif de positionnement (5) le long d'un axe (A) et peut être amenée en prise de freinage avec une contre-pièce de frein (2), dans lequel le dispositif de positionnement (5) comporte un premier entraînement de positionnement (6) et un deuxième entraînement de positionnement (7) et le dispositif de positionnement (5), pour mettre en œuvre un mouvement de déplacement, comprend un premier moteur électrique triphasé (41) et un deuxième moteur électrique triphasé (42) comportant un ensemble de circuits (100) pour faire fonctionner les moteurs électriques (41, 42), **caractérisé en ce que** l'ensemble de circuits (100) comprend un premier chemin de commande (101) comportant un premier module de puissance (103) pour commander le premier moteur électrique (41) et un deuxième chemin de commande (102) comportant un deuxième module de puissance (104) pour commander le deuxième moteur électrique (42), et **en ce que** l'ensemble de circuits (100) comprend une première unité de calcul (107) et un premier étage d'attaque (105), dans lequel la première unité de calcul (107) est conçue pour déterminer une spécification de consigne du moteur électrique sur la base de paramètres acquis et pour actionner un module de puissance (103, 104) afin d'influencer les courants du moteur via un étage d'attaque (105, 106), de sorte que la spécification de consigne du moteur électrique soit mise en œuvre.

2. Le dispositif de freinage (1) selon la revendication 1, **caractérisé en ce que** le deuxième entraînement de positionnement (7) est couplé en série avec le premier entraînement de positionnement (6), dans lequel le premier entraînement de positionnement (6) comporte une première roue d'entraînement (65) qui peut être entraînée en rotation, et le deuxième entraînement de positionnement (7) comporte une deuxième roue d'entraînement (75) qui peut être entraînée en rotation et qui est coaxiale à la première roue d'entraînement (65), un dispositif d'accouplement (8, 9) étant disposé entre la première roue d'entraînement (65) et la deuxième roue d'entraînement (75), et le dispositif d'accouplement étant conçu comme un embrayage à friction (8, 9) comportant un élément de friction (8) qui peut être relié par friction à un contre-élément de friction (9) dans l'engagement d'accouplement, le premier moteur électrique (41) permettant un fonctionnement du premier entraînement de positionnement et le deuxième moteur électrique (42) permettant un fonctionnement du deuxième entraînement de positionnement.

3. Le dispositif de freinage (1) selon la revendication 1 ou la revendication 2, **caractérisé en ce que** l'ensemble de circuits (100) est conçu pour commander le premier moteur électrique (41) et le deuxième moteur électrique (42) à l'aide de la première unité de calcul (107) et du premier étage d'attaque (105).

4. Le dispositif de freinage (1) selon l'une quelconque des revendications précédentes, **caractérisé en ce que** l'ensemble de circuits (100) comprend en outre un deuxième étage d'attaque (106), dans lequel le premier étage d'attaque (105) est affecté au premier chemin de commande (101) et le deuxième étage d'attaque (106) est affecté au deuxième chemin de commande (102).

5. Le dispositif de freinage (1) selon l'une quelconque des revendications 1 à 3, **caractérisé en ce que** l'ensemble de circuits (100) comprend en outre un deuxième étage d'attaque (106) et une deuxième unité de calcul (108), dans lequel le premier étage d'attaque (105) et la première unité de calcul (107) sont affectés au premier chemin de commande (101) et le deuxième étage d'attaque (106) et la deuxième unité de calcul (108) sont affectés au deuxième chemin de commande (102).

6. Le dispositif de freinage (1) selon la revendication 5, **caractérisé en ce que** la première unité de calcul (107) est conçue pour actionner le premier module de puissance (103) afin d'influencer les courants du premier moteur électrique (41) via le premier étage d'attaque (105) et la deuxième unité de calcul (108) est conçue pour actionner le deuxième module de puissance (104) afin d'influencer les courants du deuxième moteur électrique (42) via le deuxième étage d'attaque (106).

7. Le dispositif de freinage (1) selon l'une quelconque des revendications 4 à 6, **caractérisé en ce que** la première unité de calcul (107) est conçue pour actionner le premier module de puissance (103) afin d'influencer les courants du premier moteur électrique (41) via le premier étage d'attaque (105) et pour actionner le deuxième module de puissance (104) afin d'influencer les courants du deuxième moteur électrique (42) via le deuxième étage d'attaque (106).

8. Le dispositif de freinage (1) selon l'une quelconque des revendications précédentes, **caractérisé en ce qu'**un premier capteur de position de rotor (109) est associé au premier moteur électrique (41) et un deuxième capteur de position de rotor (110) est associé au deuxième moteur électrique (42), qui sont chacun connectés à la première unité de calcul (107) et/ou à la deuxième unité de calcul (108) pour transmettre des signaux de position du rotor.

9. Le dispositif de freinage (1) selon l'une quelconque des revendications précédentes, **caractérisé en ce que** le premier chemin de commande (101) comprend un premier élément de connexion (111) pour la connexion à une source de tension d'un véhicule à moteur en tant que source d'énergie et/ou le deuxième chemin de commande (102) comprend un deuxième élément de connexion (112) pour la connexion à une source de tension d'un véhicule à moteur en tant que source d'énergie.

10. Le dispositif de freinage (1) selon la revendication 9, **caractérisé en ce que** le premier élément de connexion (111) et/ou le deuxième élément de connexion (112) comprend un filtre EMI (121).

11. Le dispositif de freinage (1) selon l'une quelconque des revendications précédentes, **caractérisé en ce que** le premier chemin de commande (101) comprend une première interface (113) pour la connexion à un canal de communication d'un véhicule à moteur et/ou le deuxième chemin de commande (102) comprend une deuxième interface (114) pour la connexion à un canal de communication d'un véhicule à moteur.

12. Le dispositif de freinage (1) selon l'une quelconque des revendications précédentes, **caractérisé en ce que** le premier chemin de commande (101) comprend une troisième interface (115) destinée à être connectée à un capteur de vitesse de roue et/ou le deuxième chemin de commande (102) comprend une quatrième interface (116) destinée à être connectée à un capteur de vitesse de roue.

13. Le dispositif de freinage (1) selon l'une quelconque des revendications précédentes, **caractérisé en ce que** le premier chemin de commande (101) et/ou le deuxième chemin de commande (102) comprend une unité émettrice-réceptrice (124).
